# FASCICULE DE BREVET EUROPEEN

(11) **EP 0 934 796 B1**
(45) Date de publication et mention de la délivrance du brevet: **14.06.2000**
(21) Numéro de dépôt: 98102057.1
(22) Date de dépôt: 06.02.1998
(51) Int. Cl.: B23K 26/02

(54) **Procédé de fabrication d'une enveloppe tubulaire métallique dans lequel on contrôle qu'une soudure a été exécutée sans défaut et dispositif pour la mise en oeuvre du procédé**
Verfahren zur Herstellung eines metallischen Mantelrohrs wobei kontrolliert wird, dass eine fehlerfreie Schweissverbindung erzeugt wurde sowie Vorrichtung zur Durchführung des Verfahrens
Method of manufacturing a metallic tubular sheath wherein it is controlled that a defect-free weld has been made and apparatus for carrying out the method

(43) Date de publication de la demande: 11.08.1999
(73) Titulaire: Swisscab S.A., 1462 Yvonand (CH)
(72) Inventeur: Bach, Christian, 1586 Vallamand (CH)
(74) Mandataire: Ravenel, Thierry Gérard Louis

(56) Documents cités:
- EP-A- 0 670 194
- US-A- 4 649 256
- US-A- 5 380 977

## Description

La présente invention concerne un procédé de fabrication d'une enveloppe tubulaire à partir d'un ruban métallique dont les bords longitudinaux sont progressivement courbés, puis amenés à recouvrement partiel l'un sur l'autre ou en juxtaposition pour former une ligne de jonction le long de laquelle on procède à un soudage. Plus particulièrement, l'invention concerne un procédé pour fabriquer une enveloppe tubulaire dans lequel on contrôle que le cordon de soudure réalisé pour solidariser l'un des bords longitudinaux du ruban métallique sur l'autre a été exécuté sans défaut. La présente invention concerne également un dispositif de mise en oeuvre du procédé.

La présente invention vise des installations de formage, de soudage et de calibrage d'enveloppes tubulaires dans lesquelles un ruban, formé d'une bande continue d'un métal ou d'un alliage métallique présentant une bonne aptitude à la déformation à froid, est délivré à partir d'une bobine de distribution entraînée de façon classique par un moto réducteur.

Les rubans métalliques susmentionnés, nus ou revêtus d'un polymère sur une de leurs faces ou sur les deux, sont d'un usage très courant dans la fabrication de câbles tels que des câbles à fibres optiques, des câbles coaxiaux et autres, afin d'en assurer le gainage ou le blindage. Ces rubans métalliques permettent par exemple de procurer un blindage électromagnétique, de transporter un courant de court-circuit, ou encore d'améliorer la résistance aux agressions extérieures (écrasement, percement, corrosion etc.). Ils peuvent être également avantageusement utilisés pour réaliser des conduites de fluide. Dans ce cas, la structure d'une conduite ne se distingue de celle d'un câble coaxial qu'en ce que l'élément électriquement conducteur noyé dans une couche isolante est remplacé par un simple tube en polyéthylène ou en une matière plastique analogue.

Dans une installation de conformation de tubes, un ruban métallique est délivré en continu à partir d'une bobine de distribution. Le ruban, après avoir cheminé sur des poulies, arrive à une station de formage où il est progressivement replié transversalement par des galets de formage pour constituer une enveloppe tubulaire fermée, les bords longitudinaux du ruban étant amenés à recouvrement l'un sur l'autre ou en juxtaposition pour former une ligne de jonction le long de laquelle il faut ensuite procéder à un soudage. A cet effet, l'enveloppe tubulaire est acheminée à la sortie de la station de formage vers une station de soudage comprenant classiquement un dispositif de soudage à faisceau laser. Ce dispositif produit un faisceau laser qui réalise la jonction entre les bords longitudinaux du ruban métallique par fusion du métal. Une fois le soudage effectué, l'enveloppe tubulaire peut être dirigée vers une station d'extrusion dans laquelle elle est revêtue d'une gaine réalisée par exemple en polyéthylène, puis vers une station de calibrage qui donne à l'enveloppe tubulaire une section finale à profil extérieur parfaitement circulaire.

La station de soudage comprend principalement un générateur de rayons laser relié par un câble à fibres optiques à une tête de soudage comprenant un dispositif optique. Pour effectuer le soudage, on focalise le cône du faisceau laser à l'aplomb de la ligne de jonction que forment les bords longitudinaux repliés transversalement du ruban métallique. Les caractéristiques de puissance du faisceau laser (tension appliquée au générateur de rayons laser, durée et fréquence des impulsions) sont ajustées de façon à obtenir un cordon de soudure pour solidariser l'un des bords longitudinaux du ruban sur l'autre.

L'enveloppe tubulaire fabriquée à partir d'un ruban métallique dans une installation de conformation telle que celle décrite ci-dessus doit notamment présenter une étanchéité parfaite aux gaz et aux fluides. Les deux bords du ruban métallique doivent donc être soudés de manière continue sur toute leur longueur, sans aucun défaut. Le cordon de soudure ne doit présenter aucun orifice, crevasse ou autre erreur de soudage qui compromettrait l'étanchéité de l'enveloppe.

La structure cristalline d'un ruban métallique n'étant jamais rigoureusement homogène, il apparaît dans le ruban des contraintes mécaniques antagonistes qui s'amplifient au fur et à mesure que les bords du ruban sont progressivement repliés pour former l'enveloppe tubulaire. Au delà d'un certain seuil d'intensité, ces contraintes peuvent provoquer la déviation transversale de la ligne de jonction des bords du ruban de part ou d'autre de la direction de défilement de l'enveloppe tubulaire lors de son passage dans la station de soudage. De même, des contraintes responsables de la déviation de la ligne de jonction des bords du ruban peuvent apparaître dans l'enveloppe tubulaire en aval du point de soudage, lors du passage de celle-ci dans les stations ultérieures d'extrusion, de calibrage ou autre. Dans tous les cas, la ligne de jonction des bords du ruban n'est plus en alignement précis avec le point focal du faisceau laser et peut, localement, ne pas être soudée ce qui, bien sûr, provoque un défaut d'étanchéité de l'enveloppe tubulaire et la rend inutilisable.

Pour remédier à ce problème, une première solution connue consiste à surveiller en permanence le point de soudage au moyen d'un appareil de prise d'images. Dès que la ligne de jonction des bords du ruban métallique à souder n'est plus alignée avec le point focal du faisceau laser, un opérateur placé devant un écran de contrôle agit sur une commande de déplacement de la tête de soudage transversalement à la direction de défilement de l'enveloppe tubulaire lors de son passage dans le poste de soudage, afin de ramener le point focal du faisceau laser à l'aplomb de la ligne de jonction des bords du ruban.

Cette première solution nécessite la présence permanente d'un opérateur, ce qui accroît les coûts de fabrication. D'autre part, malgré la vigilance de l'opérateur, des défauts de soudage qui rendent les tubes inutilisables peuvent quand même échapper à l'attention de celui-ci. Ces pertes en cours de fabrication augmentent elles aussi le prix de revient des tubes.

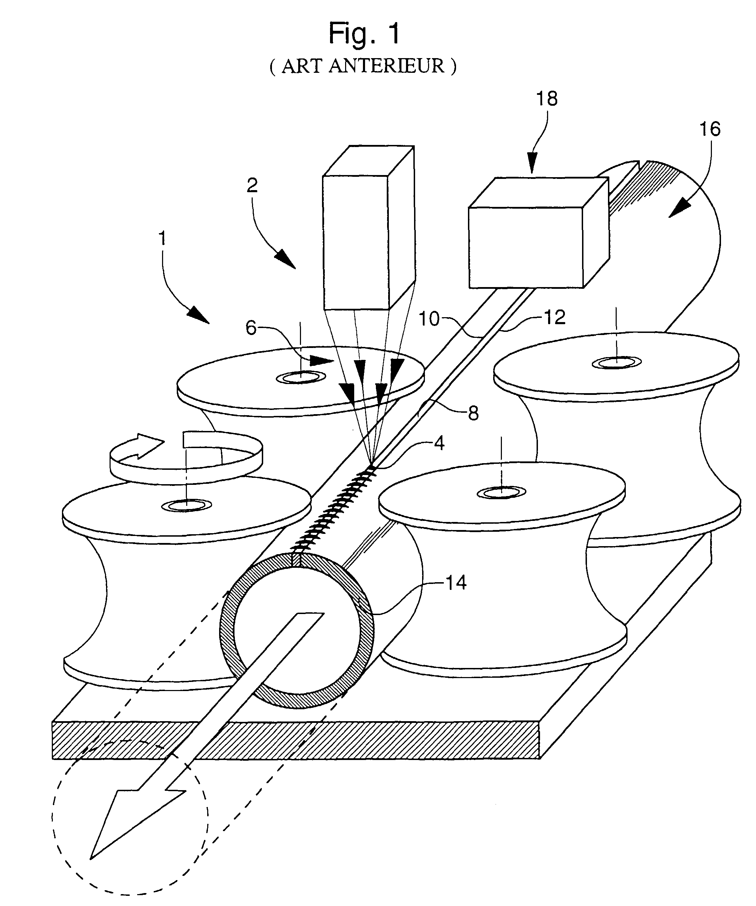

Une seconde solution connue est représentée schématiquement à la figure 1 annexée à la présente demande. Une station de soudage, désignée dans son ensemble par la référence numérique générale 1, comprend une tête de soudage laser 2 dont le point focal ou point de soudage 4 du faisceau laser 6 est placé à l'aplomb de la ligne de jonction 8 des bords longitudinaux 10 et 12 d'un ruban métallique 14 replié pour former un tube 16 fermé. La direction de défilement du tube 16 lors de son passage dans la station de soudage 1 est représentée par une flèche sur la figure 1. On dispose un capteur optique 18 en amont de la tête de soudage 2, à une distance minimale typique d'environ 50 mm. Ce capteur surveille en permanence la ligne de jonction 8 des bords 10, 12 du ruban 14. Dès que celle-ci dévie transversalement de part ou d'autre de la direction de défilement du tube 16, le capteur 18 commande le déplacement de la tête de soudage 2 afin de ramener le point de soudage 4 à l'aplomb de la ligne de jonction 8.

Ce dispositif de l'art antérieur fonctionne convenablement lorsque les déviations de la ligne de jonction 8 des bords 10, 12 du ruban 14 se produisent en amont du capteur 18. Celui-ci peut en effet détecter ces déviations et agir en conséquence sur la position de la tête de soudage 2. Par contre, lorsque les déviations de la ligne de jonction 8 s'amorcent en aval du capteur 18, entre celui-ci et le point de soudage 4, ledit capteur 18 ne peut pas détecter cette déviation et ne peut donc pas commander à temps le déplacement de la tête de soudage 2. Il en résulte de nouveau des défauts de soudage qui compromettent l'étanchéité du tube 16.

La présente invention a pour but de remédier aux problèmes et inconvénients décrits ci-dessus en proposant un procédé permettant de contrôler en continu, de façon plus économique et plus fiable, qu'un cordon de soudure réalisé le long des bords longitudinaux d'un ruban métallique progressivement replié pour former une enveloppe tubulaire est exécuté sans défaut susceptible de compromettre l'étanchéité de l'enveloppe.

L'invention a également pour objet un dispositif incorporé dans la station de soudage d'une installation de conformation de tubes faisant appel aux techniques de traitement numérique d'images pour effectuer le contrôle d'un cordon de soudure et s'assurer que celui-ci est exempt de tout défaut.

A cet effet, la présente invention a pour objet un procédé de fabrication d'une enveloppe tubulaire métallique dans une chaîne de conformation de câbles ou de tubes dans laquelle un ruban métallique est progressivement replié pour constituer une enveloppe tubulaire fermée, les bords longitudinaux du ruban étant amenés à recouvrement l'un sur l'autre ou en juxtaposition bord-à-bord pour former une ligne de jonction, l'enveloppe tubulaire étant ensuite dirigée vers une station de soudage comprenant un dispositif de soudage laser, la tête de soudage de ce dispositif produisant un faisceau laser dont les caractéristiques sont ajustées pour réaliser la jonction entre les bords longitudinaux du ruban métallique par fusion, le procédé étant caractérisé en ce qu'il comprend les étapes qui consistent à :
a) surveiller en permanence, au moyen d'un appareil de prise d'images, la zone de soudage dans laquelle le cône du faisceau laser est focalisé à l'aplomb de la ligne de jonction que forment les bords longitudinaux repliés transversalement du ruban métallique ;
b) numériser l'image de la zone de soudage fournie par l'appareil de prise d'images ;
c) comparer au moyen des techniques de traitement numérique d'images l'image de la zone de soudage fournie par l'appareil de prise d'images avec l'enregistrement d'une image de référence de cette même zone de soudage, et
d) commander en conséquence le déplacement de la tête de soudage aussitôt qu'une différence entre l'image fournie par l'appareil de prise d'images et l'image de référence dépasse un seuil déterminé.

Grâce à ces caractéristiques, le procédé selon l'invention permet, entre autres avantages, de détecter rapidement et de façon fiable toute déviation de la ligne de jonction des bords du ruban par rapport à la direction de défilement de l'enveloppe tubulaire lors de son passage dans la station de soudage, et de corriger en conséquence la position de la tête de soudage, de façon que le point focal du faisceau laser reste constamment à l'aplomb de la ligne de jonction.

Selon un autre avantage du procédé, la ligne de jonction des bords du ruban est surveillée au niveau de la zone de soudage proprement dite, et non à une certaine distance en amont de cette zone. Par conséquent, même lorsque la déviation de la ligne de jonction s'amorce à proximité immédiate de la zone de soudage, celle-ci sera immédiatement détectée et le déplacement de la tête de soudage sera commandé à temps pour corriger cette déviation et ramener le point focal du faisceau laser en alignement avec la ligne de jonction.

Selon un mode de mise en oeuvre du procédé de l'invention, la comparaison entre l'image de la zone de soudage fournie par l'appareil de prise d'images et l'enregistrement de l'image de référence de cette zone est effectuée vingt fois par seconde. Cette fréquence de comparaison permet de détecter rapidement et suffisamment tôt toute déviation de la ligne de jonction pour pouvoir commander à temps le déplacement de la tête de soudage.

Selon un mode de mise en oeuvre du procédé de l'invention, on corrige la position de la tête de soudage en faisant pivoter celle-ci selon une trajectoire en arc de cercle de même rayon que celui de l'enveloppe tubulaire. De cette façon, le cône du faisceau laser reste toujours focalisé à l'aplomb de la ligne de jonction des bords du ruban métallique, ce qui garantit une efficacité de soudage optimale.

L'invention a également pour objet un dispositif de mise en oeuvre du procédé, comprenant un appareil de prise d'images pour surveiller en permanence la zone de soudage dans laquelle le cône du faisceau laser est focalisé à l'aplomb de la ligne de jonction des bords du ruban métallique, une unité de traitement numérique d'images vers laquelle les images de la zone de soudage fournies par l'appareil de prise d'images sont transférées pour être numérisées, et une unité d'analyse d'images qui compare chaque image de la zone de soudage fournie par l'appareil de prise d'images avec une image de référence enregistrée en mémoire de cette même zone de soudage, l'unité d'analyse d'images commandant, via un dispositif de régulation de la position, le déplacement de la tête de soudage aussitôt qu'elle détecte une différence dépassant un seuil déterminé entre l'image fournie par l'appareil de prise d'images et l'image de référence enregistrée en mémoire.

D'autres caractéristiques et avantages de la présente invention apparaîtront plus clairement à la lecture de la description détaillée qui suit d'un exemple d'exécution d'un dispositif de contrôle permettant de mettre en oeuvre le procédé selon l'invention, cet exemple étant donné à titre purement illustratif et non limitatif, en liaison avec les dessins annexés dans lesquels :
- la figure 1, déjà citée, représente schématiquement un dispositif de contrôle selon l'art antérieur d'un cordon de soudure réalisé le long de la ligne de jonction des bords d'un ruban métallique ;
- la figure 2 est une représentation schématique de principe d'une chaîne de production de câbles ou de tubes, et
- la figure 3 est une représentation schématique du dispositif de mise en oeuvre du procédé selon l'invention.

Le dispositif de mise en oeuvre du procédé selon l'invention est décrit ci-dessous en référence au cas où les bords d'un ruban métallique replié pour former une enveloppe tubulaire sont amenés en juxtaposition bord-à-bord pour former une ligne de jonction le long de laquelle on réalise un cordon de soudure. Il est toutefois évident que la présente invention peut également s'appliquer au cas d'une enveloppe tubulaire dans laquelle l'un des bords longitudinaux du ruban recouvre en partie l'autre bord du ruban. Dans ce cas, on doit contrôler que le soudage d'un bord sur l'autre a été convenablement effectué.

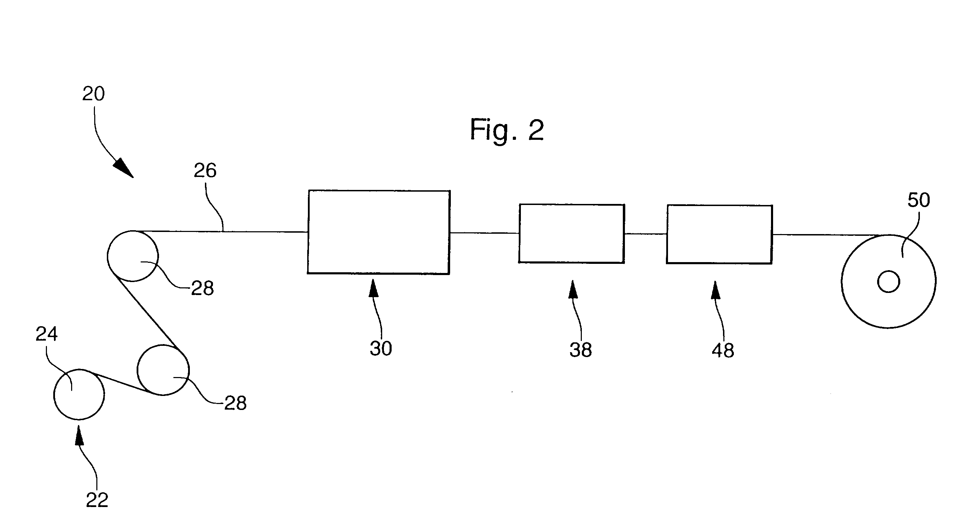

On représente à la figure 2 une unité de production de câbles et de tubes désignée dans son ensemble par la référence numérique 20. Cette unité de production 20 comprend, d'amont en aval, un dévidoir 22 permettant de supporter une bobine 24 entraînée par un moto-réducteur (non représenté) et qui délivre en continu un ruban métallique 26. Le ruban 26, après avoir cheminé sur des poulies de renvoi telles que 28, arrive à une station de conformation 30. Cette station de conformation 30 comprend des galets de formage (non représentés) à travers lesquels les bords longitudinaux 32 et 34 du ruban 26 sont progressivement repliés pour former une enveloppe tubulaire 36 fermée. En sortant de la station de conformation 30, l'enveloppe tubulaire 36 passe dans une station de soudage 38 comprenant un dispositif de soudage laser 40. Comme décrit plus en détail ci-dessous, ce dispositif de soudage 40 produit un faisceau laser 42 qui réalise un cordon de soudure 44 le long de la ligne de jonction 46 des bords 32, 34 du ruban métallique 26. Une fois le soudage effectué, l'enveloppe tubulaire 36 peut être dirigée vers une station d'extrusion 48 dans laquelle elle est enrobée d'une gaine réalisée par exemple en polyéthylène. Le produit terminé est alors stocké sur une bobine de réception 50.

Dans tout ce qui suit, on désignera les éléments identiques à ceux décrits précédemment par les mêmes références numériques.

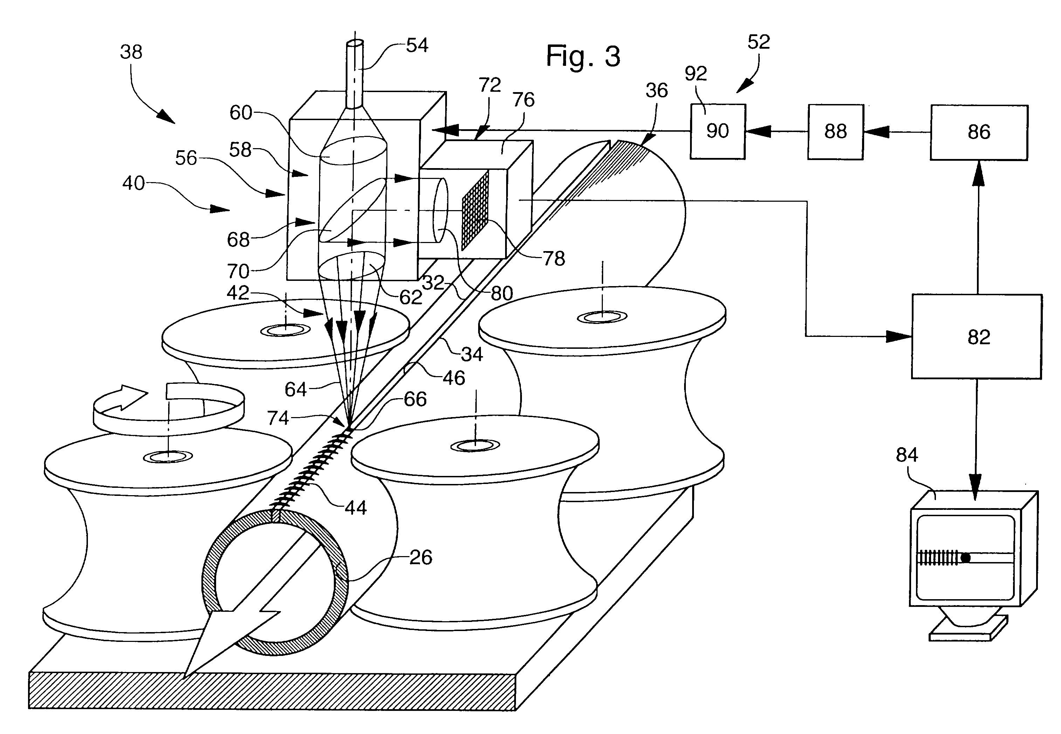

On a représenté schématiquement à la figure 3 un mode d'exécution donné à titre d'exemple non limitatif du dispositif de mise en oeuvre du procédé selon l'invention. Ce dispositif, désigné dans son ensemble par la référence numérique générale 52, est incorporé dans la station de soudage 38 de l'unité de production 20 de câbles et de tubes décrite précédemment en relation avec la figure 2.

La station de soudage 38 comprend un générateur de rayons laser (non représenté) relié par un câble 54 à fibres optiques à une tête de soudage laser 56. Celle-ci comprend notamment un dispositif optique 58 constitué de lentilles 60 et 62 pour focaliser le cône 64 du faisceau laser 42 selon un point focal 66 à l'aplomb de la ligne de jonction 46 des bords longitudinaux 32, 34 repliés transversalement du ruban métallique 26.

Conformément à la présente invention, le dispositif optique 58 de la tête de soudage laser 56 comprend d'autre part un dispositif réflecteur 68 tel qu'un miroir semi-transparent 70 disposé sur le trajet du faisceau laser 42. Ce miroir 70, par exemple orienté à 45 degrés, réfléchit vers un appareil de prise d'images 72 l'image du point focal 66 du faisceau laser 42 à l'aplomb de la ligne de jonction 46 des bords 32, 34 du ruban métallique 26. Selon un avantage essentiel du procédé de l'invention, la ligne de jonction 46 des bords 32, 34 du ruban 26 est surveillée au niveau du point focal 66 du faisceau laser 42, c'est-à-dire au niveau de la zone de soudage 74 dans laquelle le faisceau laser 42 est focalisé à l'aplomb de la ligne de jonction 46 des bords 32, 34 du ruban 26, et non à une certaine distance en amont de cette zone. Par conséquent, même lorsque la déviation de la ligne de jonction 46 s'amorce à proximité immédiate de la zone de soudage 74, cette déviation sera immédiatement détectée par l'appareil de prise d'images 72 et le déplacement de la tête de soudage laser 56 sera commandé à temps pour prendre en compte la déviation et ramener le point focal 66 du faisceau laser 42 à l'aplomb de la ligne de jonction 46.

L'appareil de prise d'images 72 est préférentiellement une caméra CCD 76, c'est-à-dire une caméra dans laquelle le tube analyseur est remplacé par une matrice à couplage de charges 78. On notera toutefois que la présente invention n'est pas limitée à un type particulier d'appareil de prise d'images, et que d'autres appareils de prise d'images peuvent être envisagés sans pour autant sortir du cadre de la présente invention. Un dispositif optique 80 est classiquement disposé à l'entrée de la matrice à couplage de charges 78 pour la focalisation du faisceau correspondant à l'image du point focal 66 du faisceau laser 42 à l'aplomb de la ligne de jonction 46.

Les images de la zone de soudage 74 fournies par la caméra CCD 76 sont dirigées vers une unité de traitement d'images 82 pour y être numérisées selon des techniques que l'homme du métier connaît bien. L'unité de traitement d'images 82 pourra être reliée à un écran de contrôle 84 pour l'affichage direct des images de la zone de soudage 74 fournies par l'appareil de prise d'images 72.

Conformément à la caractéristique essentielle de l'invention, les images de la zone de soudage 74 fournies par la caméra CCD 76 sont dirigées, après numérisation, vers une unité d'analyse d'images 86. Cette unité d'analyse d'images 86 est chargée de comparer les images de la zone de soudage 74 fournies par la caméra CCD 76 avec une image de référence de cette même zone 74 préalablement enregistrée dans un circuit électronique formant mémoire. L'image de référence de la zone de soudage 74 enregistrée dans le circuit mémoire de l'unité d'analyse 86 correspond à la situation souhaitée et idéale dans laquelle la ligne de jonction 46 des bords 32, 34 du ruban métallique 26 ne dévie pas transversalement de part ou d'autre de la direction de défilement de l'enveloppe tubulaire 36 lors de son passage dans la station de soudage 38. Ainsi, l'unité d'analyse d'images 86 compare en permanence, par exemple vingt fois par seconde, l'image de la zone de soudage 74 fournie par la caméra CCD 76 avec l'image de référence enregistrée dans sa mémoire. Ensuite, aussitôt que l'unité d'analyse 86 détecte une différence dépassant un seuil déterminé entre l'image fournie par la caméra CCD 76 et l'image de référence enregistrée dans sa mémoire, c'est-à-dire dès que la ligne de jonction 46 des bords 32, 34 du ruban métallique 26 dévie transversalement de part ou d'autre de la direction de défilement de l'enveloppe tubulaire 36 lors de son passage dans la station de soudage 38, l'unité d'analyse d'images 86 envoie un signal de commande à un dispositif de régulation de la position 88 qui, via un dispositif d'entraînement 90 tel qu'un moteur pas-à-pas 92, corrige la position de la tête de soudage 56 afin de ramener le point focal 66 du faisceau laser 54 à l'aplomb de la ligne de jonction 46 des bords 32, 34 du ruban 26.

Selon une caractéristique intéressante de l'invention, la position de la tête de soudage 56 est corrigée en la faisant pivoter selon une trajectoire en arc de cercle de même rayon que celui de l'enveloppe tubulaire 36. De cette façon, le cône 64 du faisceau laser 42 reste toujours focalisé à l'aplomb de la ligne de jonction 46 des bords 32, 34 du ruban 26, ce qui garantit une efficacité de soudage optimale.

Il va de soi que diverses modifications et variantes simples entrent dans le cadre de la présente invention.

## Revendications

1. Procédé de fabrication d'une enveloppe tubulaire métallique dans une chaîne de conformation de câbles ou de tubes dans laquelle un ruban métallique (26) est progressivement replié pour constituer une enveloppe tubulaire (36) fermée, les bords longitudinaux (32, 34) du ruban (26) étant amenés à recouvrement l'un sur l'autre ou en juxtaposition bord-à-bord pour former une ligne de jonction (46), l'enveloppe tubulaire (36) étant ensuite dirigée vers une station de soudage (38) comprenant un dispositif de soudage laser (40), la tête de soudage (56) de ce dispositif (40) produisant un faisceau laser (42) dont les caractéristiques sont ajustées pour réaliser la jonction entre les bords longitudinaux (32, 34) du ruban métallique (26) par fusion, le procédé étant caractérisé en ce qu'il comprend en outre les étapes qui consistent à :
a) surveiller en permanence, au moyen d'un appareil de prise d'images (72), la zone de soudage (74) dans laquelle le cône (64) du faisceau laser (42) est focalisé à l'aplomb de la ligne de jonction (46) que forment les bords longitudinaux (32, 34) repliés transversalement du ruban métallique (26) ;
b) numériser l'image de la zone de soudage (74) fournie par l'appareil de prise d'images (72) ;
c) comparer au moyen des techniques de traitement numérique d'images l'image de la zone de soudage (74) fournie par l'appareil de prise d'images (72) avec l'enregistrement d'une image de référence de cette même zone de soudage (74), et
d) commander en conséquence le déplacement de la tête de soudage (56) aussitôt qu'une différence entre l'image fournie par l'appareil de prise d'images (72) et l'image de référence dépasse un seuil déterminé.

2. Procédé selon la revendication 1, caractérisé en ce que la comparaison entre l'image de la zone de soudage (74) fournie par l'appareil de prise d'images (72) et l'enregistrement de l'image de référence de cette zone (74) est effectuée vingt fois par seconde, cette fréquence de comparaison permettant de détecter rapidement et suffisamment tôt toute déviation de la ligne de jonction (46) pour pouvoir commander à temps le déplacement de la tête de soudage (56).

3. Procédé selon l'une quelconque des revendications 1 ou 2, caractérisé en ce qu'on corrige la position de la tête de soudage (56) en faisant pivoter celle-ci selon une trajectoire en arc de cercle de même rayon que celui de l'enveloppe tubulaire (36), de façon que le cône (64) du faisceau laser (42) reste toujours focalisé à l'aplomb de la ligne de jonction (46) des bords (32, 34) du ruban métallique (26), ce qui garantit une efficacité de soudage optimale.

4. Dispositif de mise en oeuvre du procédé selon l'une quelconque des revendications précédentes, comprenant un appareil de prise d'images (72) pour surveiller en permanence la zone de soudage (74) dans laquelle le cône (64) du faisceau laser (42) est focalisé à l'aplomb de la ligne de jonction (46) des bords (32, 34) du ruban métallique (26), une unité de traitement numérique d'images (82) vers laquelle les images de la zone de soudage (74) fournies par l'appareil de prise d'images (72) sont transférées pour être numérisées, et une unité d'analyse d'images (86) qui compare chaque image de la zone de soudage (74) fournie par l'appareil de prise d'images (72) avec une image de référence de cette même zone de soudage (74) enregistrée dans une mémoire, l'unité d'analyse d'images (86) commandant, via un dispositif de régulation de la position (88), le déplacement de la tête de soudage (56) aussitôt qu'elle détecte une différence dépassant un seuil déterminé entre l'image fournie par l'appareil de prise d'images (72) et l'image de référence enregistrée dans sa mémoire.

5. Dispositif selon la revendication 4, caractérisé en ce que l'appareil de prise d'images (72) est une caméra CCD (76) comprenant une matrice à couplage de charges (78).

6. Dispositif selon l'une quelconque des revendications 4 ou 5, caractérisé en ce que l'unité d'analyse d'images (86) envoie, aussitôt qu'elle détecte une différence dépassant un seuil déterminé entre l'image fournie par l'appareil de prise d'images (72) et l'image de référence enregistrée en mémoire, un signal de commande au dispositif de régulation de la position (88) qui, via un dispositif d'entraînement (90), corrige la position de la tête de soudage (56) afin de ramener le point focal (66) du faisceau laser (42) à l'aplomb de la ligne de jonction (46) des bords (32, 34) du ruban métallique (26).

7. Dispositif selon la revendication 6, caractérisé en ce que le dispositif d'entraînement (90) comprend un moteur pas-à-pas (92).

8. Dispositif selon l'une quelconque des revendications 4 à 7, caractérisé en ce que le dispositif optique (58) de la tête de soudage (56) comprend un dispositif réflecteur (68) réfléchissant vers l'appareil de prise d'images (72) l'image du point focal (66) du faisceau laser (42) à l'aplomb de la ligne de jonction (46) des bords (32,34) du ruban (26).

9. Dispositif selon la revendication 8, caractérisé en ce que le dispositif réflecteur (68) comprend un miroir semi-transparent (70).

## Patentansprüche

1. Verfahren zum Herstellen einer metallischen, röhrenförmigen Hülle in einer Formungsstraße für Kabel oder Rohre, bei dem ein metallisches Band (26) nach und nach umgebogen wird, um eine geschlossene röhrenförmige Hülle (36) zu bilden, wobei die longitudinalen Ränder (32, 34) des Bandes (26) entweder so angeordnet werden, daß sie sich gegenseitig bedecken, oder so, daß sie Rand an Rand nebeneinander liegen, um eine Verbindungslinie (46) zu bilden, wobei die röhrenförmige Hülle (36) anschließend an eine Schweißstation (38) geführt wird, die eine Laser-Schweißvorrichtung (40) aufweist, wobei der Schweißkopf (56) dieser Vorrichtung (40) ein Laserstrahlenbündel (42) erzeugt, dessen Eigenschaften in der Weise eingestellt sind, daß die Verbindung zwischen den longitudinalen Rändern (32, 34) des metallischen Bandes (26) durch Schmelzen verwirklicht wird, wobei das Verfahren dadurch gekennzeichnet ist, daß es außerdem die folgenden Schritte umfaßt, die darin bestehen:
a) ständig mittels einer Bildaufnahmevorrichtung (72) die Schweißzone (74) zu überwachen, in der der Kegel (64) des Laserstrahlenbündels (42) senkrecht zur Verbindungslinie (46), die die quer zum metallischen Band (26) umgebogenen longitudinalen Ränder (32, 34) bilden, fokussiert ist;
b) das von der Bildaufnahmevorrichtung (72) gelieferte Bild der Schweißzone (74) zu digitalisieren;
c) mittels digitaler Bildverarbeitungstechniken das von der Bildaufnahmevorrichtung (72) gelieferte Bild der Schweißzone (74) mit der Aufzeichnung eines Referenzbildes dieser Schweißzone (74) zu vergleichen und
d) als Antwort darauf die Verschiebung des Schweißkopfes (56) zu steuern, sobald eine Differenz zwischen dem von der Bildaufnahmevorrichtung (72) gelieferten Bild und dem Referenzbild einen bestimmten Schwellenwert übersteigt.

2. Verfahren nach Anspruch 1, dadurch gekennzeichnet, daß der Vergleich zwischen dem von der Bildaufnahmevorrichtung (72) gelieferten Bild der Schweißzone (74) und der Aufzeichnung des Referenzbildes dieser Zone (74) zwanzig Mal pro Sekunde ausgeführt wird, wobei diese Vergleichsfrequenz eine schnelle und ausreichend frühe Erfassung jeglicher Abweichung der Verbindungslinie (46) ermöglicht, um rechtzeitig die Verschiebung des Schweißkopfes (56) zu steuern.

3. Verfahren nach einem der Ansprüche 1 oder 2, dadurch gekennzeichnet, daß die Position des Schweißkopfes (56) korrigiert wird, indem dieser längs einer Kreisbahn mit demselben Radius wie jener der röhrenförmigen Hülle (36) geschwenkt wird, so daß der Kegel (64) des Laserstrahlenbündels (42) stets senkrecht zur Verbindungslinie (46) der Ränder (32, 34) des metallischen Bandes (26) fokussiert bleibt, wodurch ein optimaler Schweißwirkungsgrad gewährleistet ist.

4. Vorrichtung zum Ausführen des Verfahrens nach einem der vorangehenden Ansprüche, mit einer Bildaufnahmevorrichtung (72) zum ständigen Überwachen der Schweißzone (74), in der der Kegel (64) des Laserstrahlenbündels (42) senkrecht zur Verbindungslinie (46) der Ränder (32, 34) des metallischen Bandes (26) fokussiert ist, einer digitalen Bildverarbeitungseinheit (82), an die die von der Bildaufnahmevorrichtung (72) gelieferten Bilder der Schweißzone (74) übertragen werden, um digitalisiert zu werden, und einer Bildanalyseeinheit (86), die jedes von der Bildaufnahmevorrichtung (72) gelieferte Bild der Schweißzone (74) mit einem Referenzbild dieser Schweißzone (74) vergleicht, das in einem Speicher aufgezeichnet ist, wobei die Bildanalyseeinheit (86) über eine Positionssteuervorrichtung (88) die Verschiebung des Schweißkopfes (56) steuert, sobald sie eine einen bestimmten Schwellenwert übersteigende Differenz zwischen dem von der Bildaufnahmevorrichtung (72) gelieferten Bild und dem in ihrem Speicher aufgezeichneten Referenzbild erfaßt.

5. Vorrichtung nach Anspruch 4, dadurch gekennzeichnet, daß die Bildaufnahmevorrichtung (72) eine CCD-Kamera (76) ist, die eine Ladungskopplungsmatrix (78) enthält.

6. Vorrichtung nach einem der Ansprüche 4 oder 5, dadurch gekennzeichnet, daß die Bildanalyseeinheit (86), sobald sie eine einen bestimmten Schwellenwert übersteigende Differenz zwischen dem von der Bildaufnahmevorrichtung (72) gelieferten Bild und dem im Speicher aufgezeichneten Referenzbild erfaßt, ein Steuersignal an die Positionssteuervorrichtung (88) schickt, die über eine Antriebsvorrichtung (90) die Position des Schweißkopfes (56) korrigiert, um den Brennpunkt (66) des Laserstrahlenbündels (42) wieder senkrecht zur Verbindungslinie (46) der Ränder (32, 34) des metallischen Bandes (26) einzustellen.

7. Vorrichtung nach Anspruch 6, dadurch gekennzeichnet, daß die Antriebsvorrichtung (90) einen Schrittmotor (92) umfaßt.

8. Vorrichtung nach einem der Ansprüche 4 bis 7, dadurch gekennzeichnet, daß die optische Vorrichtung (58) des Schweißkopfes (56) eine Reflektorvorrichtung (68) umfaßt, die das Bild des Brennpunkts (66) des Laserstrahlenbündels (42) senkrecht zur Verbindungslinie (46) der Ränder (32, 34) des Bandes (26) zur Bildaufnahmevorrichtung (72) reflektiert.

9. Vorrichtung nach Anspruch 8, dadurch gekennzeichnet, daß die Reflektorvorrichtung (68) einen halbdurchlässigen Spiegel (70) umfaßt.

## Claims

1. Manufacturing method for a tubular metal sheath in a cable or tube shaping line in which a metal tape (26) is gradually folded to form a closed tubular sheath (36), the longitudinal edges (32, 34) of the tape (26) covering each other or being juxtaposed edge to edge to form a junction line (46), the tubular sheath (36) being then directed towards a welding station (38) including a laser welding device (40), the welding head (56) of this device (40) generating a laser beam (42) whose features are adjusted to make the junction between the longitudinal edges (32, 34) of the metal tape (26) by fusion, the method being characterised in that it further includes the steps consisting in :
(a) permanently monitoring, by means of a camera (72), the welding zone (74) in which the cone (64) of the laser beam (42) is focused plumb with the junction line (46) formed by the transversely folded longitudinal edges (32, 34) of the metal tape (26);
(b) digitising the image of the welding zone (74) provided by the camera (72);
(c) comparing by means of digital processing means the image of the welding zone (74) provided by the camera (72) with the recording of a reference image of the same welding zone (74), and
(d) controlling accordingly the movement of the welding head (56) as soon as a difference between the image provided by the camera (72) and the reference image passes a determined threshold.

2. Method according to claim 1, characterised in that the comparison between the image of the welding zone (74) provided by the camera (72) and the recording of the reference image of this zone (74) is performed twenty times per second, this comparison frequency allowing any deviation in the junction line (46) to be detected rapidly and sufficiently early for the movement of the welding head (56) to be able to be controlled in time.

3. Method according to claims 1 or 2, characterised in that the position of the welding head (56) is corrected by causing it to pivot along a trajectory in the arc of a circle of the same radius as that of the tubular sheath (36), so that the cone (64) of the laser beam (42) always stays focused plumb with the junction line (46) of the edges (32, 34) of the metal tape (36), which guarantees optimum welding efficiency.

4. Device for implementing the method according to any of the preceding claims, including a camera (72) for permanently monitoring the welding zone (74) in which the cone (64) of the laser beam (42) is focused plumb with the junction line (46) of the edges (32, 34) of the metal tape (26), a digital image processing unit (82) to which the images of the welding zone (74) provided by the camera (72) are transferred to be digitised, and an image analysing unit (86) which compares each image of the welding zone (74) provided by the camera (72) with a reference image of the same welding zone (74) stored in a memory, the image analysing unit (86) controlling, via a position adjusting device (88), the movement of the weld head (56) as soon as it detects a difference exceeding a determined threshold between the image provided by the camera (72) and the reference image stored in its memory.

5. Device according to claim 4, characterised in that the camera (72) is a CCD camera (76) including a charge coupling matrix (78).

6. Device according to claims 4 or 5, characterised in that, as soon as it detects a difference exceeding a determined threshold between the image provided by the camera (72) and the reference image stored in the memory, the image analysing unit (86) sends a control signal to the position adjusting device (88) which, via a drive device (90), corrects the position of the welding head (56), so as to bring the focal point (66) of the laser beam (42) plumb with the junction line (46) of the edges (32, 34) of the metal tape (26).

7. Device according to claim 6, characterised in that the drive device (90) includes a stepping motor (92).

8. Device according to any of claims 4 to 7, characterised in that the optical device (58) of the welding head (56) includes a reflector device (68) reflecting, towards the camera (72), the image of the focal point (66) of the laser beam (42) plumb with the junction line (46) of the edges (32, 34) of the tape (26).

9. Device according to claim 8, characterised in that the reflector device (68) includes a semi-transparent mirror (70).
